# EUROPEAN PATENT SPECIFICATION

(11) **EP 4 356 204 B1**
(45) Date of publication and mention of the grant of the patent: **05.08.2026**
(21) Application number: 21737313.3
(22) Date of filing: 14.06.2021
(51) Int. Cl.: G05B 13/04, G05B 17/02, G05B 13/02, G05B 15/02

(54) **SYSTEMS AND METHODS FOR MULTIDEVICE LEARNING AND INFERENCE IN AN AMBIENT COMPUTING ENVIRONMENT**
SYSTEME UND VERFAHREN FÜR LERNEN UND INFERENZ MEHRERER VORRICHTUNGEN IN EINER AMBIENT-COMPUTING-UMGEBUNG
SYSTÈMES ET PROCÉDÉS D'APPRENTISSAGE ET D'INFÉRENCE MULTIDISPOSITIF DANS UN ENVIRONNEMENT INFORMATIQUE AMBIANT

(43) Date of publication of application: 24.04.2024
(73) Proprietor: GOOGLE LLC, Mountain View CA 94043 (US)
(72) Inventor: SHARIFI, Matthew, Mountain View, CA 94043 (US)
(74) Representative: Davis, Steven George
(86) International application number: PCT/US2021/037207
(87) International publication number: WO 2022/265616

(56) References cited:
- WO-A1-2020/156004
- US-A1- 2016 234 206
- US-A1- 2021 019 564
- US-A1- 2021 248 499

## Description

### BACKGROUND

When a user activates a smart device today, it will often be operating in an ambient computing environment that already includes multiple other smart devices, some of which may have overlapping functionalities. For example, a user might have one or more cameras that monitor areas inside and outside the user's home, one or more smart speakers and/or smart displays that listen for and respond to voice commands, a smart thermostat that monitors temperature in one or more rooms, a smart fire alarm that monitors for smoke and/or intense heat, and a security system that monitors the opening of various doors and windows, motion in given rooms, the sound of glass breaking, etc. In addition, the ambient computing environment may further include one or more devices that may temporarily or permanently come and go, but which may have similar functionality (e.g., smart phones, smart watches, and personal computers that also may be configured to listen for and respond to voice commands).

At present, many smart devices are configured to operate largely independently from one another in order to perform their designated task or set of tasks. For example, a smart speaker may be configured to run its own audio-based model to detect voice commands, and a doorbell camera may be configured to run a different set of its own visual and audio processing models to detect when a person (e.g., the home owner, a family member) arrives at a home owner's front door. Although these devices may both be configured to listen for and recognize sounds in the same general environment, they may each be configured to learn and make inferences regarding what they are hearing on their own. This may lead to waste in terms of the time it takes for a new device to train its model(s) in a new environment, as well as the aggregate power and computing cycles needed to run inference tasks on multiple devices at once. In addition, configuring each device to independently monitor and perceive its environment may waste an opportunity for various devices to benefit from different perspectives and sensing capabilities of other smart devices that are also present in the ambient computing environment.

US 2021/248499 A1 discloses model training methods, apparatuses, and systems, in which a first training participant performs an iterative process until a predetermined condition is satisfied, where the iterative process includes: obtaining, using secret sharing matrix addition and based on the current sub-model of each training participant and a corresponding feature sample subset of each training participant, a current prediction value of the regression model for a feature sample set, where the corresponding feature sample subset of each training participant is obtained by performing vertical segmentation on the feature sample set; determining a prediction difference between the current prediction value and a label corresponding to the current prediction value; sending the prediction difference to each second training participant; and updating a current sub-model of the first training participant based on the current sub-model of the first training participant and a product of a corresponding feature sample subset of the first training participant and the prediction difference.

### BRIEF SUMMARY

The claims define the matter for protection.

The present technology concerns systems and methods for multidevice learning and inference in an ambient computing environment. In that regard, in some aspects, the present technology discloses systems and methods for performing cross-device learning in which new devices may be trained based on supervision signals from existing devices in the ambient computing environment. Further, in some aspects, the present technology discloses systems and methods for performing multi-device inference across two or more devices in the ambient computing environment. Likewise, in some aspects, the present technology discloses systems and methods for training models that are robust to the addition or removal of one or more devices from an ambient computing environment.

In one aspect, the disclosure describes a computer-implemented method of training a model to perform inference in an ambient computing environment having a plurality of devices, the method comprising: (i) identifying, by one or more processors of a processing system, a multi-device inference paradigm to be used to perform inference with the model based on inputs from one or more of the plurality of devices; (ii) for each given event of a plurality of events: generating, by the one or more processors, a first prediction using the model according to the multi-device inference paradigm based on a first input set, the first input set comprising at least one input from each of the plurality of devices; generating, by the one or more processors, a second prediction using the model according to the multi-device inference paradigm based on a second input set, the second input set comprising a modified copy of the first input set; and generating, by the one or more processors, a loss value based on the first prediction and the second prediction; and (iii) modifying, by the one or more processors, one or more parameters of the model based on the loss value generated for at least one given event. In some aspects, each of the plurality of events occurs during a given period, and the first input set for each given event is based on data sensed by the plurality of devices during the given period. In some aspects, the given period is a noncontinuous period comprised of two or more separate periods. In some aspects, the one or more processors are configured to generate each first prediction, each second prediction, and each loss value during a given period, and the first input set for each given event is based on data sensed prior to the given period. In some aspects, for each given event of the plurality of events, the second input set comprises a modified copy of the first input set that includes one or more selected inputs of the first input set and omits one or more other inputs from the first input set. In some aspects, the method further comprises, for each given event of a plurality of events, determining, by the one or more processors, to omit the one or more other inputs based on a first value. In some aspects, the method further comprises modifying, by the one or more processors, the first value based on how often a device associated with the first input has been present in the ambient computing during a period of time. In some aspects, the method further comprises modifying, by the one or more processors, the first value based on how much power has been consumed by a device associated with the first input during a period of time. In some aspects, for each given event of the plurality of events, the second input set comprises a modified copy of the first input set in which at least a first input of the first input set is replaced with a copy of a second input of the first input set. In some aspects, for each given event of the plurality of events, the second input set comprises a modified copy of the first input set in which at least a first input of the first input set is replaced with an upsample of a second input of the first input set. In some aspects, for each given event of the plurality of events, the second input set comprises a modified copy of the first input set in which at least a first input of the first input set is replaced with a downsample of a second input of the first input set. In some aspects, for a given event of the plurality of events, the second input set comprises a modified copy of the first input set in which at least a first input of the first input set is replaced with a synthetic input based on two or more other inputs of the first input set. In some aspects, the synthetic input is an average of the two or more other inputs of the first input set.

In another aspect, the disclosure describes a system for training a model to perform inference in an ambient computing environment having a plurality of devices, the system comprising: a memory; and one or more processors coupled to the memory and configured to: (i) identify a multi-device inference paradigm to be used to perform inference with the model based on inputs from one or more of the plurality of devices; (ii) for each given event of a plurality of events: generate a first prediction using the model according to the multi-device inference paradigm based on a first input set, the first input set comprising at least one input from each of the plurality of devices; generate a second prediction using the model according to the multi-device inference paradigm based on a second input set, the second input set comprising a modified copy of the first input set; and generate a loss value based on the first prediction and the second prediction; and (iii) modify one or more parameters of the model based on the loss value generated for at least one given event. In some aspects, the one or more processors are further configured to generate, for each given event of the plurality of events, a second prediction based on a second input set comprising a modified copy of the first input set that includes one or more selected inputs of the first input set and omits one or more other inputs from the first input set. In some aspects, the one or more processors are further configured to, for each given event of a plurality of events, determine to omit the one or more other inputs based on a first value. In some aspects, the one or more processors are further configured to modify the first value based on how often a device associated with the first input has been present in the ambient computing during a period of time. In some aspects, the one or more processors are further configured to modify the first value based on how much power has been consumed by a device associated with the first input during a period of time. In some aspects, the one or more processors are further configured to generate, for each given event of the plurality of events, a second prediction based on a second input set comprising a modified copy of the first input set in which at least a first input of the first input set is replaced with a copy, upsample, or downsample of a second input of the first input set. In some aspects, the one or more processors are further configured to generate, for each given event of the plurality of events, a second prediction based on a second input set comprising a modified copy of the first input set in which at least a first input of the first input set is replaced with a synthetic input based on two or more other inputs of the first input set.

### BRIEF DESCRIPTION OF THE DRAWINGS

FIG. 1 is a functional diagram of an example ambient computing environment in accordance with aspects of the disclosure.
FIG. 2 is a functional diagram of an example processing system in accordance with aspects of the disclosure.
FIG. 3 is a flow diagram showing an exemplary method for training a new device in an ambient computing environment, in accordance with aspects of the disclosure.
FIG. 4 is a flow diagram showing an exemplary method for performing multi-device inference in an ambient computing environment, in accordance with aspects of the disclosure.
FIG. 5 is a flow diagram showing an exemplary method for training models to be robust to the addition or removal of a device from an ambient computing environment, in accordance with aspects of the disclosure.
FIG. 6 is a flow diagram showing an exemplary method for training models to be robust to the addition or removal of a device from an ambient computing environment, in accordance with aspects of the disclosure.

### DETAILED DESCRIPTION

The present technology will now be described with respect to the following exemplary systems and methods.

### Example Systems

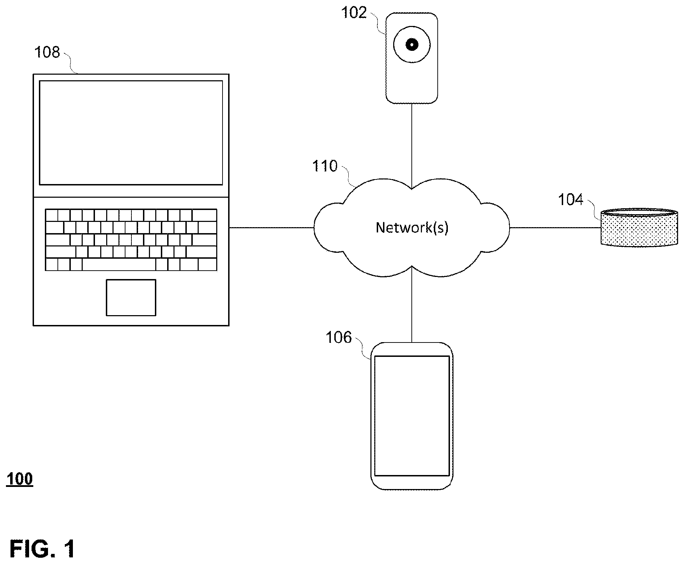

FIG. 1 schematically illustrates a high level system diagram of an exemplary ambient computing environment 100 in accordance with aspects of the disclosure. In that regard, the exemplary ambient computing environment 100 of FIG. 1 includes a camera 102, speaker 104, mobile phone or tablet 106, and a personal computer 108, all of which are connected to one or more networks 110. In this example, it is assumed that camera 102 is capable of recording both audio and video, such as a security camera, doorbell camera, web-conferencing camera, etc. Likewise, it is assumed that speaker 104 is a smart speaker equipped with a microphone (not shown) and configured to listen for and respond to voice-based input (e.g., spoken commands to play a given song, check weather forecasts, etc.). The mobile phone/tablet 106 and personal computer 108 are also assumed to have microphones, and to be configured to listen for and respond to voice-based input (e.g., spoken commands for an automated assistant, dictation for speech-to-text, etc.).

The one or more networks 110 may be any suitable number and/or combination of networks capable of providing connections between the camera 102, speaker 104, mobile phone/tablet 106, and personal computer 108. Thus, in some aspects of the technology, network(s) 110 may comprise a single local area network, a combination of two or more local area networks, a combination of a local area network and the internet, etc. Likewise, one or more devices in the ambient computing environment may gain access to network 110 through another device. For example, camera 102 may be equipped to communicate using Bluetooth to mobile phone 106, which in turn enables camera 102 to communicate with network 110. As will be understood, the exemplary ambient computing environment 100 shown in FIG. 1 is for illustrative purposes only, and the present technology is not limited to any particular topology.

As will be explained further below, one or more of devices 102-108 may be configured to store and run one or more models for perceiving its environment. Likewise, in some aspects of the technology, one or more models may be stored on a separate device, such as a local or remote processing system (not shown) which is accessible over the one or more networks 110. For example, one or more models may be stored on a remote database, and one or more of devices 102-108 may be configured to retrieve model(s) from the remote database in order to perform inference and perceive their environment. In some aspects, one or more of devices 102-108 may also be configured to use a remote processing system for performing inference. For example, one or more of devices 102-108 may transmit data received from their environment (e.g., audio, video), or partially processed representations thereof (e.g., vector representations produced by one or more model(s) on the device), to a remote processing system which then feeds that data to one or more of its own models and responds with the classifications output by those models.

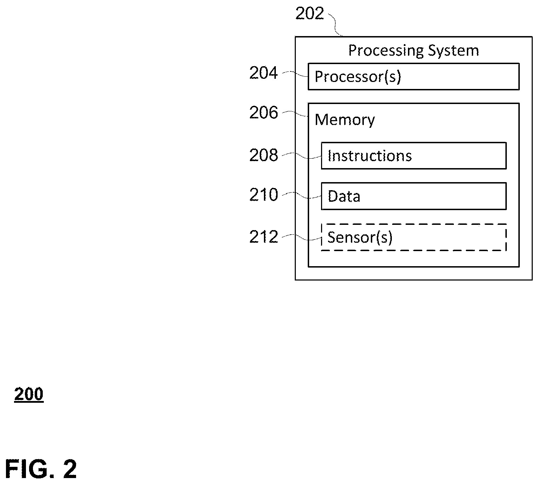

A high-level system diagram 200 of an exemplary processing system for performing the methods described herein is shown in FIG. 2. Processing system 202 may represent any smart device (e.g., devices 102-108 of FIG. 1) or computing system that may be included in an ambient computing environment (e.g., ambient computing environment 100). Likewise, processing system 202 may be a local or remote processing system configured to store one or more models for use by one or more smart devices in an ambient computing environment. Further, processing system 202 may be a local or remote processing system configured to process data received from one or more smart devices in an ambient computing environment. In addition, processing system 202 may be a distributed system. Thus, in some aspects of the technology, processing system 202 may comprise a collection of smart devices in an ambient computing environment, a cloud computing system, a combination thereof, etc.

Processing system 202 may include one or more processors 204 and memory 206 storing instructions 208 and data 210. Processing system 202 may also optionally include one or more sensors 212 for sensing data in the ambient computing environment. Where applicable, data 210 may include one or more models for processing data sensed by the at least one sensor 212, and/or data provided to the processing system by one or more other devices in the ambient computing environment, as described further below.

The processing systems described herein may be implemented on any type of computing device(s), such as any type of general computing device, server, or set thereof, and may further include other components typically present in general purpose computing devices or servers. Memory 206 stores information accessible by the one or more processors 204, including instructions 208 and data 210 that may be executed or otherwise used by the processor(s) 204. Memory 206 may be of any non-transitory type capable of storing information accessible by the processor(s) 204. For instance, memory 206 may include a non-transitory medium such as a hard-drive, memory card, optical disk, solid-state, tape memory, or the like. Computing devices suitable for the roles described herein may include different combinations of the foregoing, whereby different portions of the instructions and data are stored on different types of media.

In all cases, the computing devices described herein may further include any other components normally used in connection with a computing device such as a user interface subsystem. The user interface subsystem may include one or more user inputs (e.g., a mouse, keyboard, touch screen and/or microphone) and one or more electronic displays (e.g., a monitor having a screen or any other electrical device that is operable to display information). Output devices besides an electronic display, such as speakers, lights, and vibrating, pulsing, or haptic elements, may also be included in the computing devices described herein.

The one or more processors included in each computing device may be any conventional processors, such as commercially available central processing units ("CPUs"), graphics processing units ("GPUs"), tensor processing units ("TPUs"), etc. Alternatively, the one or more processors may be a dedicated device such as an ASIC or other hardware-based processor. Each processor may have multiple cores that are able to operate in parallel. The processor(s), memory, and other elements of a single computing device may be stored within a single physical housing, or may be distributed between two or more housings. Similarly, the memory of a computing device may include a hard drive or other storage media located in a housing different from that of the processor(s), such as in an external database or networked storage device. Accordingly, references to a processor or computing device will be understood to include references to a collection of processors or computing devices or memories that may or may not operate in parallel, as well as one or more servers of a load-balanced server farm or cloud-based system.

The computing devices described herein may store instructions capable of being executed directly (such as machine code) or indirectly (such as scripts) by the processor(s). The computing devices may also store data, which may be retrieved, stored, or modified by one or more processors in accordance with the instructions. Instructions may be stored as computing device code on a computing device-readable medium. In that regard, the terms "instructions" and "programs" may be used interchangeably herein. Instructions may also be stored in object code format for direct processing by the processor(s), or in any other computing device language including scripts or collections of independent source code modules that are interpreted on demand or compiled in advance. By way of example, the programming language may be C#, C++, JAVA or another computer programming language. Similarly, any components of the instructions or programs may be implemented in a computer scripting language, such as JavaScript, PHP, ASP, or any other computer scripting language. Furthermore, any one of these components may be implemented using a combination of computer programming languages and computer scripting languages.

### Example Methods

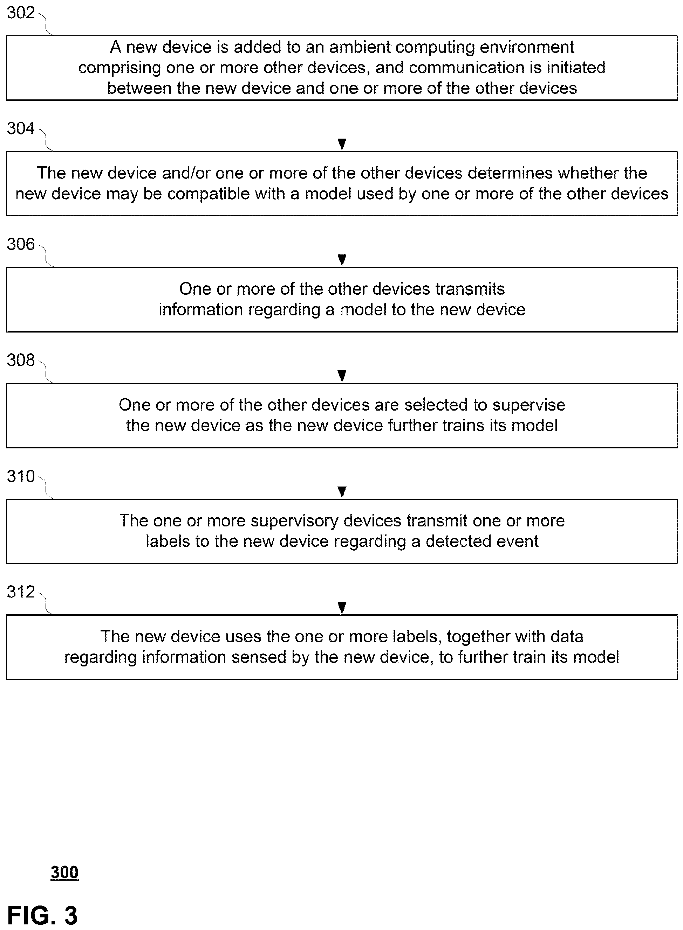

FIG. 3 depicts an exemplary method 300 for training a new device in an ambient computing environment, in accordance with aspects of the disclosure.

In that regard, in step 302, a new device is added to an ambient computing environment comprising one or more other devices (e.g., ambient computing environment 100 of FIG. 1), and communication is initiated between the new device and one or more of the other devices. For example, the ambient computing environment may initially include the devices shown in FIG. 1, and the new device may be a new camera (e.g., identical or similar to camera 102) installed in another location. The existing devices and new device may be configured to discover one another in any suitable way, e.g., using wireless protocols such as WiFi, Bluetooth, ultrasound, etc.

In step 304, the new device and/or one or more of the other devices determines whether the new device may be compatible with a model used by one or more of the other devices. This may be accomplished in any suitable way. For example, the new device and/or the existing devices may be configured to recognize similarities between each other. Thus, using the example discussed above where the new device is a new camera, either the new camera or the existing camera 102 may be configured to recognize that they are both cameras. Based on this, the new camera or the existing camera 102 may be configured to determine that the model used by the existing camera 102 may be compatible with the new camera. Likewise, if the new device is a camera, and the existing device is a smart speaker, it may be determined that the model of the smart speaker may still be compatible with the camera insofar as the camera is also equipped with a microphone and is configured to perform similar voice recognition tasks to those performed by the existing smart speaker. In such a case, the smart speaker's model may be combined with another model configured to accept video input, so as to create a model that can accept both audio and video inputs while still benefitting from the smart speaker's accrued knowledge.

In step 306, one or more of the other devices transmits information regarding a model to the new device. This information may be the model itself, a portion of the model, the type of model, etc. Thus, continuing with the example where the new device is a new camera and the existing device is camera 102, the existing camera 102 may transmit a copy of its trained (e.g., initially trained and/or fine-tuned) model to the new camera to be used as the initial model for the new camera. This trained model may reflect things that the existing camera 102 has learned through time, such as the sound of the user's voice, the identity of family members, etc. Likewise, in some aspects of the technology, the existing camera 102 may transmit a portion of its trained model (e.g., a set of initial layers) to be used in generating initial representations or classifications to be shared with the existing camera 102 in situations where the devices will collaboratively perform classification (as discussed further below). Further, in some aspects of the technology, the existing camera 102 may inform the new camera of the type of model it uses, and the new camera may be configured to then choose a copy of that same type of model (e.g., either from a base model that is prestored on the new camera or from a remote processing system).

In step 308, one or more of the other devices are selected to supervise the new device as the new device further trains its model. As discussed with respect to step 306, the new device's model may be a copy of a model from one of the other devices or a portion thereof, a copy of a model that was prestored on the new device, or a copy of a model that was obtained from a remote processing system. The set of one or more supervisory devices may be (or include) the same device which shared information regarding its model with the new device, or may be a separate set of one or more other devices. The choice of which devices will supervise the new device may be based on any suitable criteria such as: how close they are to the new device; how similar their perceptive functions are to those which the new device will perform; how many sensors they contain; how much processing power they have; how fine-tuned their own models are; how personalized their models are (e.g., from explicit user feedback). Thus, using the exemplary ambient computing environment 100 of FIG. 1, if the new device is a camera, the existing camera 102 may be selected to supervise the new camera based on its similar perceptive functions in some cases. However, the existing camera 102 may not be selected to supervise the new camera in all cases, such as where the existing camera 102 is installed far away from the new camera where it is less likely to be exposed to the same sights and sounds as the new camera.

In step 310, the one or more supervisory devices transmit one or more labels to the new device regarding a detected event. In some aspects of the technology, the one or more supervisory devices may be configured to automatically transmit the one or more labels to the new device whenever an event is detected. Likewise, in some aspects of the technology, the new device may be configured to request labels from the one or more supervisory devices whenever the new device detects an event. For example, if the new device is the first to detect an event, it may send a request for any labels that the supervisory devices may have applied to a given time (or a range of time).

In some aspects of the technology, the one or more labels may also be accompanied by data regarding the time (or a range of time) during which the event was detected. For example, if camera 102 is a supervisory device and recognizes the homeowner based on the homeowner's appearance and voice, camera 102 may be configured to send a label identifying the homeowner to the new camera. Likewise, if a nearby smart speaker (e.g., speaker 104) is also a supervisory device and also detects the homeowner based on their voice, the smart speaker may also send a label indicating this to the new camera.

In step 312, the new device uses the one or more labels, together with data regarding information sensed by the new device, to further train its model. Thus, continuing with the example set forth in step 310, the new camera may create a training example by pairing a given sample of audio and/or video data recorded by the new camera with the labels it received from the existing camera 102 and the existing smart speaker 104, and then may modify one or more parameters of its models based on those labels during backpropagation. Likewise, in some aspects of the technology, the new camera may process a given sample of audio and/or video data recorded by the new camera using its own model in order to generate a prediction based on that sample of audio and/or video data. The new camera may then use the labels from the existing camera 102 and the existing smart speaker 104, together with its own generated prediction, to generate one or more loss values. Those one or more loss values may then be used during backpropagation to modify one or more parameters of the new camera's model. In this regard, where the new device receives multiple labels, it may combine the labels in any suitable way. Thus, in some aspects of the technology, the new device may combine the labels in a weighted manner based on how close each supervisory device is to the new device, how strong each supervisory device's signal was (e.g., how confident that device's model was regarding the prediction), whether the supervisory device's sensors are the same or different than the new device, etc.

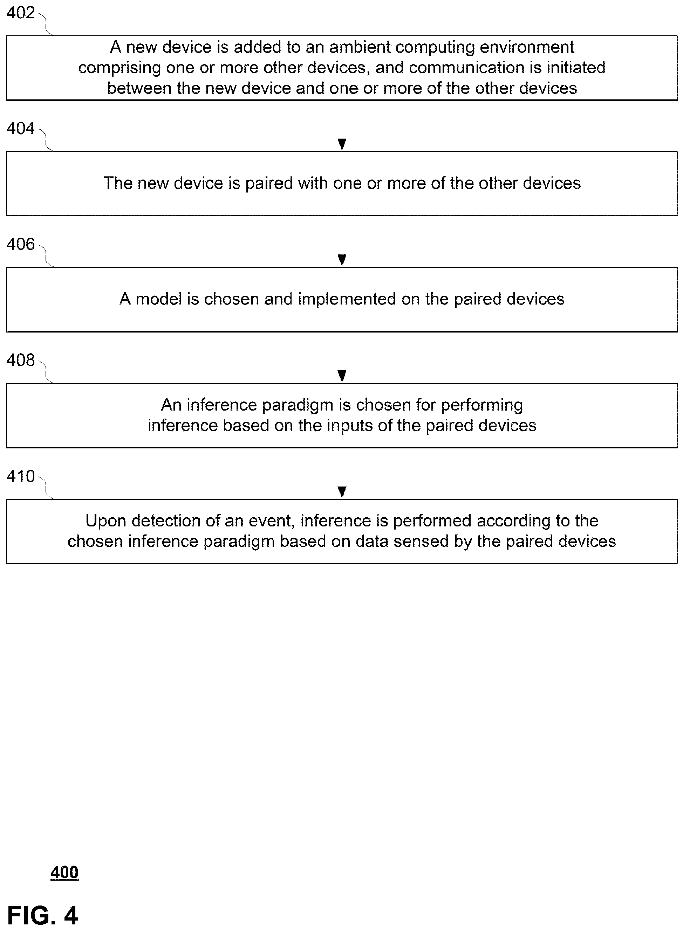

FIG. 4 depicts an exemplary method 400 for performing multi-device inference in an ambient computing environment, in accordance with aspects of the disclosure.

In that regard, in step 402, a new device is added to an ambient computing environment comprising one or more other devices (e.g., ambient computing environment 100 of FIG. 1), and communication is initiated between the new device and one or more of the other devices. For example, the ambient computing environment may initially include the devices shown in FIG. 1, and the new device may be a new camera (e.g., identical or similar to camera 102) installed in another location. The existing devices and new device may be configured to discover one another in any suitable way, e.g., using wireless protocols such as WiFi, Bluetooth, ultrasound, etc. In some aspects of the technology, the new device and/or one or more other devices in the ambient computing environment may be configured with limitations regarding with which devices they may communicate. For example, devices may be configured to only allow communication with other devices associated with their same account.

In step 404, the new device is paired with one or more of the other devices. The devices may be configured to pair up with one another based on any suitable criteria such as whether the devices are of the same type (e.g., both cameras), have similar sensors (e.g., cameras and smart speakers both having microphones), are located close to one another (e.g., the devices are both positioned in the same room), and/or perform similar functions (e.g., voice recognition, motion detection). Likewise, the decision to pair may be based, in whole or in part, on whether a model is available that would be able to accept inputs from all of the devices if they were to be paired.

In step 406, a model is chosen and implemented on the paired devices. In some aspects of the technology, each of the paired devices may implement a full copy of the chosen model. Likewise, in some aspects, one of the paired devices may be chosen to host the full model, and the other paired devices may store only a portion of the model (e.g., some number of initial layers of the model). In such a case, the devices with a partial copy of the model may be configured to use the partial model to process their own data and send the output to the device that hosts the full model for further processing.

The chosen model may be selected, downloaded, or created by any one of the paired devices. For example, one or more of the devices may have a library of predefined models for various anticipated pairings, and the model may be selected from that library. Likewise, a library of such models may be available on a local or remote processing system (e.g., a local networked storage device, a cloud storage system, etc.), and the model may be selected and downloaded from that processing system.

In some aspects of the technology, the model may be one that is capable of handling inputs from each paired device without modification. For example, upon adding a new camera to an ambient computing environment that already included a camera and a smart speaker, one of the devices may have access to a predefined model that processes input from two cameras (e.g., with audio and video feeds) and one separate microphone (e.g., from a smart speaker).

Likewise, in some aspects of the technology, the model may be one that requires modification in order to handle inputs from each paired device. In such a case, the chosen model may be created by modifying or combining one or more models selected and/or downloaded from local or remote model libraries. For example, in some aspects, an ambient computing environment may initially include one camera and one smart speaker, and they may operate using a model configured to accept inputs from one camera and one separate microphone. Upon adding an additional camera, if a predefined model is not available, one or more of the paired devices may be configured to modify the existing model with one or more initial layers that characterize and pool the data from both cameras, and then pass the pooled camera data into the preexisting layers of the original model along with the data from the smart speaker's microphone.

Similarly, in some aspects of the technology, the model may be created from a combination of two or more existing models. For example, if a new camera is added to an ambient computing environment that initially includes a camera and a microphone, the devices may create a new model by combining the existing model (configured to accept input from one camera and one other microphone) with a second model configured to accept input from a single camera, and feeding their respective classifications into one or more final layers configured to output a final classification.

In step 408, an inference paradigm is chosen for performing inference based on the inputs of the paired devices. The inference paradigm may be any suitable paradigm for performing inference across multiple devices.

For example, in some aspects of the technology, each of the paired devices may be configured to continuously capture information, and pass information (or a partially processed representation or classification based thereon) to the other devices. In such a case, each paired device may be configured to maintain and use its own copy of the chosen model to classify any sensed event based on the information it senses together with the information it receives from the other paired devices.

Further, in some aspects of the technology, one of the paired devices may be selected as a leader to run continuous classification and to provide its classifications to the other devices. This paradigm may consume less power and processing cycles than the prior paradigm. The leader device may be chosen based on any suitable criteria such as processing power, a connection to a continuous power source, etc. In such a case, the leader may, upon detecting an event, solicit information regarding that event from each of the other paired devices. The information provided by other paired devices may comprise any suitable data regarding the event, such as the data that the device sensed, a representation thereof created by processing the sensed data using a partial copy of the chosen model, a single-device classification based on the sensed data, etc. The leader device may then perform classification using a full version of the chosen model, based on the information it sensed together with the information it receives from the other paired devices. The leader device may then share its final classification with the other devices so that each may perform their respective functions based on the final classification.

Similarly, in some aspects of the technology, one of the paired devices may be selected as a leader to run continuous classification using the full model, but may not be configured to solicit information from the other paired devices upon detecting an event. Rather, each paired device may be configured to continuously capture information, perform single-device classification (e.g., using a partial copy of the chosen model, or a model configured to receive input from a single device), and then share its classification with the leader. As above, the leader would then perform classification using a full version of the chosen model, based on the information it senses together with the single-device classifications it receives from the other paired devices. As above, the leader would then share its final classification with the other devices.

In step 410, upon detection of an event, inference is performed according to the chosen inference paradigm based on data sensed by the paired devices. As noted above, this may involve inference being fully performed on each of the paired devices, or on a chosen leader device based on information or classifications provided by the other paired devices.

In addition to the exemplary inference steps set forth in FIG. 4, the paired devices may be configured to train (e.g., initial training or fine-tuning) the chosen model based on any suitable criteria. For example, the paired devices (or a chosen leader device) may be configured to train the chosen model based on user feedback signals (e.g., explicit input from a user identifying a person recorded in a video or audio sample). Likewise, the paired devices (or a chosen leader device) may be configured to train the model so that the layer at which information from the other paired devices is combined is modified. For example, this combination layer may be chosen so as to achieve an optimal balance between accuracy and one or more other criteria such as power consumption or communication link utilization.

Although FIG. 4 sets forth a method for selecting an appropriate model and multi-device inference paradigm for a given ambient computing environment, not all ambient computing environments will be static. In that regard, many ambient computing environments may include one or more devices that can be moved, and thus may transiently come and go from the ambient computing environment. For example, laptop computers, tablets, smart phones, and smart watches may be configured to connect to a network, interface with other devices on the network (e.g., running applications that provide access to and/or control of cameras, smart speakers, security systems), and/or provide similar services to those provided by other devices in the ambient computing environment. However, such devices may also periodically appear and disappear from the network and the ambient computing environment when a user carries them into and out of the network's coverage area. Likewise, in any ambient computing environment, devices may be added, and other devices may eventually be permanently removed, such as when a device fails or is replaced. In many cases, changes to the composition of the ambient computing environment may adversely impact the quality of the inferences provided by whatever model was originally chosen, and/or may warrant selection of a new model.

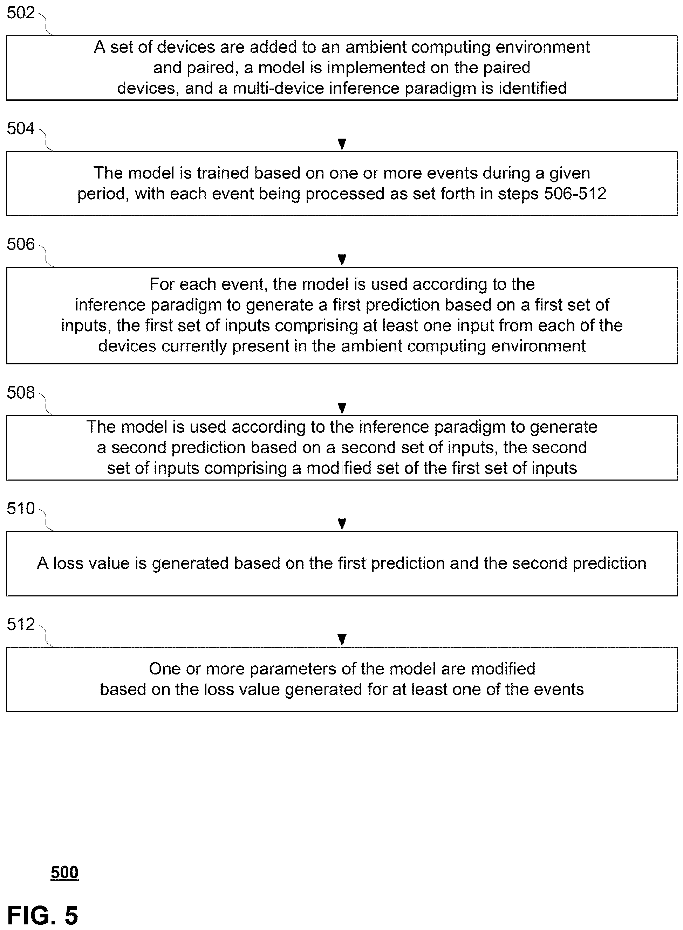

In that regard, FIG. 5 depicts an exemplary method 500 for training models to be robust to the addition or removal of a device (and its associated sensors) from an ambient computing environment, in accordance with aspects of the disclosure.

In step 502, a set of devices are added to an ambient computing environment and paired, a model is implemented on the paired devices, and a multi-device inference paradigm is identified. This may take place in any suitable manner, including according to the options described above with respect to steps 402-408 of FIG. 4. In that regard, as discussed above with respect to step 406, the chosen model may also be one that has been created by modifying an existing model (e.g., by adding layers to enable multiple inputs to be pooled prior to being fed into the existing model) or by combining two or more existing models (e.g., by feeding inputs into two or more existing models and combining their outputs using one or more classification layers).

In step 504, the model is trained (e.g., initially trained and/or fine-tuned) based on one or more events during a given period, with each event being processed as set forth in steps 506-512. This training process may be performed by any or all of the paired devices. Thus, in some aspects of the technology, one of the paired devices may be chosen as a leader tasked with performing steps 506-512. Likewise, in some aspects of the technology, each of the paired devices may perform steps 506-512 individually. For example, in paradigms where each device maintains a full or partial copy of the model, each of the paired devices may train its own copy of the model based on steps 506-512.

The given period during which the model is trained may be any suitable length of time, such as an hour, a day, a week, etc. Likewise, the given period of time may be a noncontinuous period such as an hour in the morning, afternoon, and evening of one or more days. Further, the given period may be measured not in terms of time, but instead may be whatever length of time is necessary for the model to experience some predetermined number of events, or to obtain a predetermined loss over a set of events. In some aspects of the technology, the given period may be limited to times during which all paired devices are present in the ambient computing environment. Further, steps 506-512 may be used to re-tune the model after it has been initially trained and/or fine-tuned. For example, in some aspects of the technology, the model may be retuned on a periodic basis (e.g., every Monday, once a month), upon a user request, when a device is repositions or permanently removed, etc.

Further, although the model may be trained based on events that take place in real-time during the training period, the model may also be trained based on a preexisting set of training data (e.g., a set of events recorded previously by the devices or another set of similar devices, a set of supervised training examples with human-generated labels, etc.). In instances where the model is trained on a preexisting set of training data, each training example may constitute an event, and the given period may be the length of time necessary for the model to run through that preexisting set of training data.

In step 506, for each event, the model is used according to the inference paradigm to generate a first prediction based on a first set of inputs, the first set of inputs comprising at least one input from each of the devices currently present in the ambient computing environment. For example, assuming that the ambient computing environment includes a camera, a smart speaker, and a mobile phone, a model may be chosen which will perform inference based on audio and video input from the camera, audio input from the smart speaker's microphone, and audio input from the smart phone's microphone. In such a case, the first prediction may be based on each of these inputs from each of these devices. The first prediction may be any intermediate or final prediction produced by the model. Thus, the first prediction may be a final vector or final classification output by the model, or an intermediate vector or intermediate classification on which the model may base a final prediction.

In step 508, the model is used according to the inference paradigm to generate a second prediction based on a second set of inputs, the second set of inputs comprising a modified set of the first set of inputs. In this regard, the second set of inputs may be the same as the first set of inputs, except that at least one input from at least one of the devices currently present in the ambient computing environment may be omitted or replaced with some other data. Where the inference paradigm involves a chosen leader device, with each of the other paired devices sending a representation or classification to the leader device, the second set of inputs may thus result in one or more such representations or classifications being replaced, omitted, or zeroed out when the leader device performs inference using the full model. Here as well, the second prediction may be any intermediate or final prediction produced by the model. Thus, the second prediction may be a final vector or final classification output by the model, or an intermediate vector or intermediate classification on which the model may base a final prediction.

Thus, using the same example discussed in step 506, the second prediction may be based on the inputs from the camera and the smart speaker (that were included in the first set of inputs), with the input from the smart phone being omitted or zeroed out.

Likewise, the second prediction may be based on the inputs from the camera and the smart speaker, with the input from the smart phone being replaced in some manner.

For example, in some aspects of the technology, an input (e.g., audio data collected by a microphone in a smart phone) may be replaced with an identical copy, downsample, or upsample of a similar input (e.g., audio data collected by a microphone of a smart speaker in the ambient computing environment). In this regard, the replacement input may be taken from a device that is not included in the first input set. For example, the first input set may include inputs A, B, and C and may be modified by replacing input C with similar input D, such that the second input set includes inputs A, B, and D.

Likewise, in some aspects of the technology, an input (e.g., audio data collected by a microphone in a smart phone) may be replaced with a synthetic input based on multiple similar inputs (e.g., a weighted average of audio data collected by a microphone of multiple smart speakers, or a weighted average of audio data collected by a microphone of a smart speaker and additional audio data collected a microphone of a camera). Here as well, the replacement signal may be based on identical copies, downsamples, or upsamples of the multiple similar inputs.

Further, in some aspects of the technology, an input from a given device may be replaced with data that slightly precedes or succeeds the event (e.g., from a predetermined number of seconds prior to or following an event). This may be useful in situations where a device's signal only temporarily goes missing, but prior and subsequent events still provide clues as to what took place during an event.

The determination of which input to omit or replace may be based on any suitable criteria. Thus, in some aspects of the technology, the input(s) to be omitted or replaced may be randomly selected. Likewise, in some aspects of the technology, the input(s) to be omitted or replaced may be selected based on an assumed or calculated dropout probability. Further, in some aspects of the technology, the input(s) to be omitted or replaced may be modified by (e.g., multiplied by) an assumed or calculated dropout probability.

For example, using the same exemplary ambient computing environment discussed in step 506, the inputs associated with the camera, smart speaker, and smart phone may each be assigned an associated dropout probability based on assumptions or calculations regarding how often the associated device will be present in the ambient computing environment. Thus, the inputs associated with the camera may be assigned a preset dropout probability of 0.1 based on the camera being a type that must be physically mounted to a wall, the audio input associated with the smart speaker may be assigned a preset dropout probability of 0.3 based on the smart speaker being battery operated and movable to areas where network coverage is not guaranteed, and the audio input associated with the smart phone may be assigned a preset dropout probability of 0.7 based on the phone being expected to be carried outside of the local network for extended periods of time.

In another example, the dropout probabilities may be based on assumptions or calculations regarding how much power is consumed by each device. Thus, in some aspects of the technology, the dropout probabilities of each device may have an inverse relationship with how much power is consumed by each device, on the assumption that power saving paradigms may prioritize devices that consume less power over those that use more.

In another example, the dropout probabilities may be calculated based on historical data regarding how often each device has been present in the ambient computing environment during some past period of time (e.g., based on maintained logs), or how much power each device has consumed during some past period of time.

In another example, the dropout probabilities may be preset to a set value regardless of the type of device. Thus, in such a case, the inputs associated with the camera, smart speaker, and smart phone may each initially receive dropout probabilities of 0, 0.5, 1, etc.

Further, in some aspects of the technology, the dropout probabilities may be updated over time. In that regard, though initial dropout probabilities may be assigned as discussed above, they may be modified based on how frequently each device actually does come and go from the ambient computing environment. In this way, if the model is periodically retuned according to steps 506-512, inputs may be omitted based on dropout probabilities that more closely reflect reality.

In step 510, a loss value is generated based on the first prediction and the second prediction. This loss value may be generated according to any suitable loss function (e.g., classification loss, L1 loss, L2 loss, cross-entropy loss, etc.). In some aspects of the technology, the loss value may be an aggregate loss value (e.g., an average loss value) generated and updated over some number of events.

In step 512, one or more parameters of the model are modified based on the loss value generated for at least one of the events. This backpropagation step may be performed at any suitable interval. Thus, in some aspects of the technology, the parameters of the model may be updated after every event. Likewise, in some aspects of the technology, the backpropagation may be performed after a certain number of events. For example, after a selected number of events have been processed, the one or more parameters may be modified based on each of the loss values generated for those events. Likewise, in some aspects of the technology, each event may be processed to generate an aggregate loss value as discussed above with respect to step 510, and the one or more parameters of the model may be modified based on the aggregate loss value.

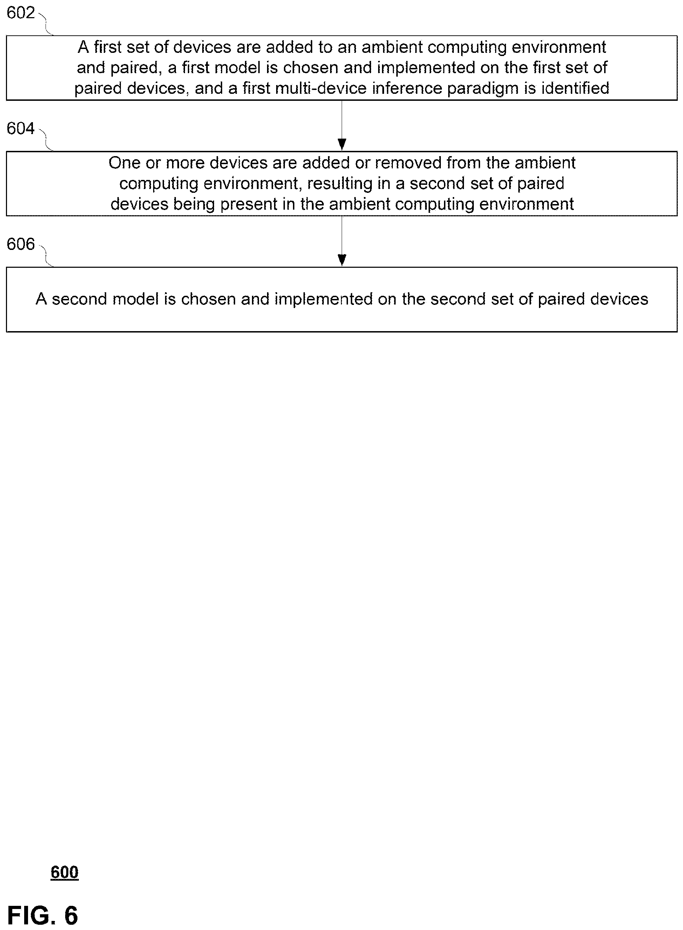

FIG. 6 depicts another exemplary method 600 for training models to be robust to the addition or removal of a device from an ambient computing environment, in accordance with aspects of the disclosure.

In step 602, a first set of devices are added to an ambient computing environment and paired, a first model is chosen and implemented on the first set of paired devices, and a first multi-device inference paradigm is identified. This may take place in any suitable manner, including according to the options described above with respect to steps 402-408 of FIG. 4.

To help illustrate method 600, it will be assumed that the ambient computing environment originally includes a camera, a smart speaker, and a mobile phone, and that the first model is one that is configured to perform inference based on audio and video input from the camera, audio input from the smart speaker's microphone, and audio input from the smart phone's microphone.

In step 604, one or more devices are added or removed from the ambient computing environment, resulting in a second set of paired devices being present in the ambient computing environment. Thus, continuing with the prior example, if the smart phone is removed from the ambient computing environment, the second set of paired devices will include the camera and the smart speaker.

In step 606, a second model is chosen and implemented on the second set of paired devices. This second model may also be selected, downloaded, or created based on any suitable criteria by any one of the paired devices, as discussed above with respect to step 406 of FIG. 4. Thus, continuing with the prior example, once the smart phone is removed from the ambient computing environment, one or more of the remaining devices may choose a second model that is configured to perform inference based only on audio and video input from the camera, and audio input from the smart speaker's microphone.

In some aspects of the technology, the second model may be one that has been trained (initially trained and/or fine-tuned) along with the first model. In such a case, one or more of the first set of devices may be configured to identify one or more models in addition to the first model which would be configured to accept input from predictable modifications to the ambient computing environment. Thus, continuing with the prior example, at the time the first model is chosen and implemented, at least one device may be configured to likewise load one or more additional models. For example, the device may load an additional model that would accept inputs only from the camera, another model that would accept inputs only from the smart speaker, another model that would accept inputs from the camera and the smart speaker, and another model that would accept inputs from the camera and the smart phone. That device may then be configured to train (e.g., initially train and/or fine-tune) the additional models in parallel with training of the first model, so that the trained additional models would be available for implementation when one or more of the devices leave the ambient computing environment. Likewise, the device may also be configured to load and train one or more additional models that represent likely additions to the first set of devices (e.g., a model configured to accept inputs from two cameras, one smart speaker, and one smart phone).

Further in this regard, after transitioning to the second model, one or more of the devices in the second set of devices may be configured to retain a copy of the first model so as to enable transition back to the first model if the composition of the ambient computing environment is restored to its original state (e.g., using the prior example, if the smart phone returns to the ambient computing environment). Likewise, in some aspects of the technology, one or more of the devices may be configured to upload a copy of the first model to a local or remote processing system so that the first model may be downloaded again if the composition of the ambient computing environment is restored to its original state. Similar to the above, to the extent that training continues while the second model is in use, the first model (and any other additional models) may likewise continue to be trained in parallel with the second model.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of exemplary systems and methods should be taken by way of illustration rather than by way of limitation of the subject matter defined by the claims. In addition, the provision of the examples described herein, as well as clauses phrased as "such as," "including," "comprising," and the like, should not be interpreted as limiting the subject matter of the claims to the specific examples; rather, the examples are intended to illustrate only some of the many possible embodiments. Further, the same reference numbers in different drawings can identify the same or similar elements.

## Claims

1. A computer-implemented method of training a model to perform inference in an ambient computing environment (100) having a plurality of devices (102, 104, 106, 108), the method comprising:
identifying, by one or more processors (204) of a processing system (202), a multi-device inference paradigm to be used to perform inference with the model based on inputs from one or more of the plurality of devices;
for each given event of a plurality of events, wherein each of the plurality of events occurs during a given period of time:
generating, by the one or more processors, a first prediction using the model according to the multi-device inference paradigm based on a first input set, the first input set comprising at least one input from each of the plurality of devices based on data sensed by the plurality of devices during the given period of time;
generating, by the one or more processors, a second prediction using the model according to the multi-device inference paradigm based on a second input set, the second input set comprising a modified copy of the first input set that includes one or more selected inputs of the first input set and omits one or more other inputs from the first input set; and
generating, by the one or more processors, a loss value based on the first prediction and the second prediction; and
modifying, by the one or more processors, one or more parameters of the model based on the loss value generated for at least one given event.

2. The method of claim 1, wherein the multi-device inference paradigm involves performing the inference with respective copies of the model at each of the plurality of devices, or performing the inference with the model at a leader device selected from among the plurality of devices.

3. The method of claim 3, wherein the given period is a noncontinuous period comprised of two or more separate periods.

4. The method of claim 1**,** wherein the one or more processors are configured to generate each first prediction, each second prediction, and each loss value during a given period, and the first input set for each given event is based on data sensed prior to the given period.

5. The method of claim 1, further comprising, for each given event of a plurality of events:
determining, by the one or more processors, to omit the one or more other inputs based on a first value.

6. The method of claim 5, further comprising:
modifying, by the one or more processors, the first value based on how often a device associated with the first input has been present in the ambient computing during a period of time.

7. The method of claim 5, further comprising:
modifying, by the one or more processors, the first value based on how much power has been consumed by a device associated with the first input during a period of time.

8. The method of claim 1, wherein, for each given event of the plurality of events, the second input set comprises a modified copy of the first input set in which at least a first input of the first input set is replaced with a copy of a second input of the first input set.

9. The method of claim 1**,** wherein, for each given event of the plurality of events, the second input set comprises a modified copy of the first input set in which at least a first input of the first input set is replaced with an upsample of a second input of the first input set.

10. The method of claim 1, wherein, for each given event of the plurality of events, the second input set comprises a modified copy of the first input set in which at least a first input of the first input set is replaced with a downsample of a second input of the first input set.

11. The method of claim 1, wherein, for a given event of the plurality of events, the second input set comprises a modified copy of the first input set in which at least a first input of the first input set is replaced with a synthetic input based on two or more other inputs of the first input set.

12. The method of claim 11, wherein the synthetic input is an average of the two or more other inputs of the first input set.

13. A system for training a model to perform inference in an ambient computing environment having a plurality of devices, the system comprising:
a memory; and
one or more processors coupled to the memory and configured to perform the method according to any one of claims 1 to 12.

## Patentansprüche

1. Computerimplementiertes Verfahren zum Trainieren eines Modells, um eine Inferenz in einer Ambient-Computing-Umgebung (100) durchzuführen, die eine Vielzahl von Vorrichtungen (102, 104, 106, 108) aufweist, wobei das Verfahren umfasst:
Identifizieren, durch einen oder mehrere Prozessoren (204) eines Verarbeitungssystems (202), eines Inferenzparadigmas mehrerer Vorrichtungen, das verwendet werden soll, um eine Inferenz mit dem Modell basierend auf den Eingaben von einer oder mehreren der Vielzahl von Vorrichtungen durchzuführen;
für jedes gegebene Ereignis einer Vielzahl von Ereignissen, wobei jedes der Vielzahl von Ereignissen während eines gegebenen Zeitraums auftritt:
Erzeugen, durch den einen oder die mehreren Prozessoren, einer ersten Vorhersage unter Verwendung des Modells gemäß dem Inferenzparadigma mehrerer Vorrichtungen basierend auf einem ersten Eingabesatz, wobei der erste Eingabesatz mindestens eine Eingabe von jeder der Vielzahl von Vorrichtungen basierend auf den Daten umfasst, die durch die Vielzahl von Vorrichtungen während des gegebenen Zeitraums erfasst werden;
Erzeugen, durch den einen oder die mehreren Prozessoren, einer zweiten Vorhersage unter Verwendung des Modells gemäß dem Inferenzparadigma mehrerer Vorrichtungen basierend auf einem zweiten Eingabesatz, wobei der zweite Eingabesatz eine modifizierte Kopie des ersten Eingabesatzes umfasst, die eine oder mehrere ausgewählte Eingaben des ersten Eingabesatzes beinhaltet und eine oder mehrere andere Eingaben aus dem ersten Eingabesatz auslässt; und
Erzeugen, durch den einen oder die mehreren Prozessoren, eines Verlustwerts basierend auf der ersten Vorhersage und der zweiten Vorhersage; und
Modifizieren, durch den einen oder die mehreren Prozessoren, eines oder mehrerer Parameter des Modells basierend auf dem Verlustwert, der für mindestens ein gegebenes Ereignis erzeugt wird.

2. Verfahren nach Anspruch 1, wobei das Inferenzparadigma mehrerer Vorrichtungen ein Durchführen der Inferenz mit jeweiligen Kopien des Modells an jeder der Vielzahl von Vorrichtungen oder ein Durchführen der Inferenz mit dem Modell an einer Leader-Vorrichtung, die aus der Vielzahl von Vorrichtungen ausgewählt ist, beinhaltet.

3. Verfahren nach Anspruch 3, wobei der gegebene Zeitraum ein nicht kontinuierlicher Zeitraum ist, der aus zwei oder mehr separaten Zeiträumen besteht.

4. Verfahren nach Anspruch 1, wobei der eine oder die mehreren Prozessoren konfiguriert sind, um jede erste Vorhersage, jede zweite Vorhersage und jeden Verlustwert während eines gegebenen Zeitraums zu erzeugen, und der erste Eingabesatz für jedes gegebene Ereignis auf den Daten basiert, die vor dem gegebenen Zeitraum erfasst werden.

5. Verfahren nach Anspruch 1, ferner umfassend, für jedes gegebene Ereignis einer Vielzahl von Ereignissen:
Bestimmen, durch den einen oder die mehreren Prozessoren, die eine oder die mehreren anderen Eingaben basierend auf einem ersten Wert auszulassen.

6. Verfahren nach Anspruch 5, ferner umfassend:
Modifizieren, durch den einen oder die mehreren Prozessoren, des ersten Werts basierend darauf, wie oft eine Vorrichtung, die der ersten Eingabe zugeordnet ist, während eines Zeitraums in dem Ambient-Computing vorhanden gewesen ist.

7. Verfahren nach Anspruch 5, ferner umfassend:
Modifizieren, durch den einen oder die mehreren Prozessoren, des ersten Werts basierend darauf, wie viel Leistung durch eine Vorrichtung, die der ersten Eingabe zugeordnet ist, während eines Zeitraums verbraucht worden ist.

8. Verfahren nach Anspruch 1, wobei für jedes gegebene Ereignis der Vielzahl von Ereignissen der zweite Eingabesatz eine modifizierte Kopie des ersten Eingabesatzes umfasst, in der mindestens eine erste Eingabe des ersten Eingabesatzes durch eine Kopie einer zweiten Eingabe des ersten Eingabesatzes ersetzt wird.

9. Verfahren nach Anspruch 1, wobei für jedes gegebene Ereignis der Vielzahl von Ereignissen der zweite Eingabesatz eine modifizierte Kopie des ersten Eingabesatzes umfasst, in der mindestens eine erste Eingabe des ersten Eingabesatzes durch ein Upsample einer zweiten Eingabe des ersten Eingabesatzes ersetzt wird.

10. Verfahren nach Anspruch 1, wobei für jedes gegebene Ereignis der Vielzahl von Ereignissen der zweite Eingabesatz eine modifizierte Kopie des ersten Eingabesatzes umfasst, in der mindestens eine erste Eingabe des ersten Eingabesatzes durch ein Downsample einer zweiten Eingabe des ersten Eingabesatzes ersetzt wird.

11. Verfahren nach Anspruch 1, wobei für ein gegebenes Ereignis der Vielzahl von Ereignissen der zweite Eingabesatz eine modifizierte Kopie des ersten Eingabesatzes umfasst, in der mindestens eine erste Eingabe des ersten Eingabesatzes durch eine synthetische Eingabe basierend auf zwei oder mehr anderen Eingaben des ersten Eingabesatzes ersetzt wird.

12. Verfahren nach Anspruch 11, wobei die synthetische Eingabe ein Durchschnitt der zwei oder mehr anderen Eingaben des ersten Eingabesatzes ist.

13. System zum Trainieren eines Modells, um eine Inferenz in einer Ambient-Computing-Umgebung durchzuführen, die eine Vielzahl von Vorrichtungen aufweist, wobei das System umfasst:
einen Speicher; und
einen oder mehrere Prozessoren, die mit dem Speicher gekoppelt und konfiguriert sind, um das Verfahren gemäß einem der Ansprüche 1 bis 12 durchzuführen.

## Revendications

1. Procédé mis en œuvre par ordinateur d'entraînement d'un modèle pour réaliser de l'inférence dans un environnement informatique ambiant (100) ayant une pluralité de dispositifs (102, 104, 106, 108), le procédé comprenant :
l'identification, par un ou plusieurs processeurs (204) d'un système de traitement (202), d'un paradigme d'inférence multidispositif à utiliser pour réaliser de l'inférence avec le modèle sur la base des entrées d'un ou plusieurs de la pluralité de dispositifs ;
pour chaque événement donné d'une pluralité d'événements, dans lequel chacun de la pluralité d'événements se produit au cours d'une période de temps donnée :
la génération, par les un ou plusieurs processeurs, d'une première prédiction utilisant le modèle selon le paradigme d'inférence multidispositif sur la base d'un premier ensemble d'entrées, le premier ensemble d'entrées comprenant au moins une entrée de chacun de la pluralité de dispositifs sur la base des données détectées par la pluralité de dispositifs pendant la période de temps donnée ;
la génération, par les un ou plusieurs processeurs, d'une seconde prédiction utilisant le modèle selon le paradigme d'inférence multidispositif sur la base d'un second ensemble d'entrées, le second ensemble d'entrées comprenant une copie modifiée du premier ensemble d'entrées qui comporte une ou plusieurs entrées sélectionnées du premier ensemble d'entrées et omet une ou plusieurs autres entrées du premier ensemble d'entrées ; et
la génération, par les un ou plusieurs processeurs, d'une valeur de perte sur la base de la première prédiction et de la seconde prédiction ; et
la modification, par les un ou plusieurs processeurs, d'un ou plusieurs paramètres du modèle sur la base de la valeur de perte générée pour au moins un événement donné.

2. Procédé selon la revendication 1, dans lequel le paradigme d'inférence multidispositif consiste à réaliser l'inférence avec des copies respectives du modèle sur chacun de la pluralité de dispositifs, ou à réaliser l'inférence avec le modèle sur un dispositif leader sélectionné parmi la pluralité de dispositifs.

3. Procédé selon la revendication 3, dans lequel la période donnée est une période non continue composée de deux ou plusieurs périodes distinctes.

4. Procédé selon la revendication 1, dans lequel les un ou plusieurs processeurs sont configurés pour générer chaque première prédiction, chaque seconde prédiction et chaque valeur de perte au cours d'une période donnée, et le premier ensemble d'entrées pour chaque événement donné est basé sur des données détectées avant la période donnée.

5. Procédé selon la revendication 1, comprenant en outre, pour chaque événement donné d'une pluralité d'événements :
la détermination, par les un ou plusieurs processeurs, d'omettre les une ou plusieurs autres entrées sur la base d'une première valeur.

6. Procédé selon la revendication 5, comprenant en outre :
la modification, par les un ou plusieurs processeurs, de la première valeur sur la base de la fréquence à laquelle un dispositif associé à la première entrée a été présent dans l'environnement informatique ambiant pendant une période de temps.

7. Procédé selon la revendication 5, comprenant en outre :
la modification, par les un ou plusieurs processeurs, de la première valeur sur la base de la quantité d'énergie consommée par un dispositif associé à la première entrée pendant une période de temps.

8. Procédé selon la revendication 1, dans lequel, pour chaque événement donné de la pluralité d'événements, le second ensemble d'entrées comprend une copie modifiée du premier ensemble d'entrées dans laquelle au moins une première entrée du premier ensemble d'entrées est remplacée par une copie d'une seconde entrée du premier ensemble d'entrées.

9. Procédé selon la revendication 1, dans lequel, pour chaque événement donné de la pluralité d'événements, le second ensemble d'entrées comprend une copie modifiée du premier ensemble d'entrées dans laquelle au moins une première entrée du premier ensemble d'entrées est remplacée par un sur-échantillonage d'une seconde entrée du premier ensemble d'entrées.

10. Procédé selon la revendication 1, dans lequel, pour chaque événement donné de la pluralité d'événements, le second ensemble d'entrées comprend une copie modifiée du premier ensemble d'entrées dans laquelle au moins une première entrée du premier ensemble d'entrées est remplacée par un sous-échantillonage d'une seconde entrée du premier ensemble d'entrées.

11. Procédé selon la revendication 1, dans lequel, pour chaque événement donné de la pluralité d'événements, le second ensemble d'entrées comprend une copie modifiée du premier ensemble d'entrées dans laquelle au moins une première entrée du premier ensemble d'entrées est remplacée par une entrée synthétique sur la base de deux ou plusieurs autres entrées du premier ensemble d'entrées.

12. Procédé selon la revendication 11, dans lequel l'entrée synthétique est une moyenne des deux ou plusieurs autres entrées du premier ensemble d'entrées.

13. Système d'entraînement d'un modèle pour réaliser de l'inférence dans un environnement informatique ambiant ayant une pluralité de dispositifs, le système comprenant :
une mémoire ; et
un ou plusieurs processeurs couplés à la mémoire et configurés pour réaliser le procédé selon l'une quelconque des revendications 1 à 12.
